Europäisches Patentamt

European Patent Office

Office européen des brevets

(19)

(11) **EP 1 544 875 A1**

(12) **EUROPEAN PATENT APPLICATION**
published in accordance with Art. 158(3) EPC

(43) Date of publication:
**22.06.2005 Bulletin 2005/25**

(51) Int Cl.⁷: **H01F 17/06**, H01F 1/34

(21) Application number: **03816836.5**

(86) International application number:
**PCT/JP2003/012043**

(22) Date of filing: **22.09.2003**

(87) International publication number:
**WO 2005/029516 (31.03.2005 Gazette 2005/13)**

(84) Designated Contracting States:
**DE FR GB NL**

(71) Applicant: **Minebea Co.,Ltd.**
**Nagano 389-0293 (JP)**

(72) Inventors:
• **KOBAYASHI, Osamu**
**Iwata-gun, Shizuoka 437-1193 (JP)**
• **YAMADA, Osamu**
**Iwata-gun, Shizuoka 437-1193 (JP)**

• **SUZUKI, Yukio**
**Iwata-gun, Shizuoka 437-1193 (JP)**
• **ITO, Kiyoshi**
**Iwata-gun, Shizuoka 437-1193 (JP)**
• **SHIRAI, Mayuka**
**Iwata-gun, Shizuoka 437-1193 (JP)**

(74) Representative: **Patentanwälte**
**Schaad, Balass, Menzl & Partner AG**
**Dufourstrasse 101**
**Postfach**
**8034 Zürich (CH)**

(54) **SIGNAL DISCRIMINATOR**

(57)    A signal discriminator is provided which leverages variation of permittivity of Mn-Zn-based ferrite. The signal discriminator comprises a soft magnetic material which has a capacitive reactance C, and which has its complex relative permittivity varying with frequency such that the real part $\varepsilon 1$ of the complex relative permittivity is large in a low frequency domain and small in a high frequency domain. In the reactance component X2, the capacitive reactance C is not negligible with respect to the inductive reactance L in a low frequency domain, in consequence of which the value of the reactance component X2 as a parallel circuit of the capacitive reactance C and the inductive reactance L is caused to decrease, and the influence of the capacitive reactance C is decreased in a high frequency domain. Consequently, the reactance component X2 decreases more than the reactance component X1 of a conventional soft magnetic material, and the X-R cross-point frequency moves to a frequency lower than a conventional X-R cross-point frequency XR1, whereby noises in a frequency band where noise components exist are converted into thermal energy thus reducing the waveform distortion originating from high frequency noises.

Fig. 1

EP 1 544 875 A1

**Description**

FIELD OF THE INVENTION

The present invention relates to a signal discriminator, and particularly to a signal discriminator which has an excellent noise blocking characteristic, and which is free from waveform distortion.

DESCRIPTION OF THE RELATED ART

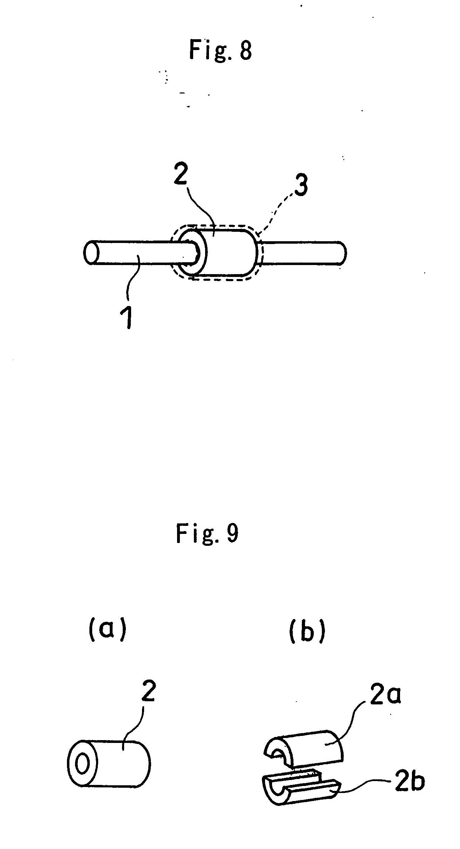

As electronic devices are coming out with a reduced dimension and an enhanced performance, it is becoming increasingly important to reduce radiation noise coming from a cable, such as a signal line and a power line, and conduction noise getting in the cable and conducting therethrough. Fig. 8 shows a signal discriminator that is conventionally and generally used to provide the simplest and easiest way for suppressing such noises. Referring to Fig. 8, the signal discriminator comprises a cylindrical or toroidal magnetic core 2, and an insulator 3 to cover the magnetic core 2, and is attached on a cable 1, such as a signal line or a power line, such that the cable 1 passes through the magnetic core 2. The cylindrical or toroidal magnetic core 2 may be structured by a single piece 2 as shown in Fig. 9(a), or alternatively by two pieces 2a and 2b as shown in Fig. 9(b), so as to form a closed magnetic path.

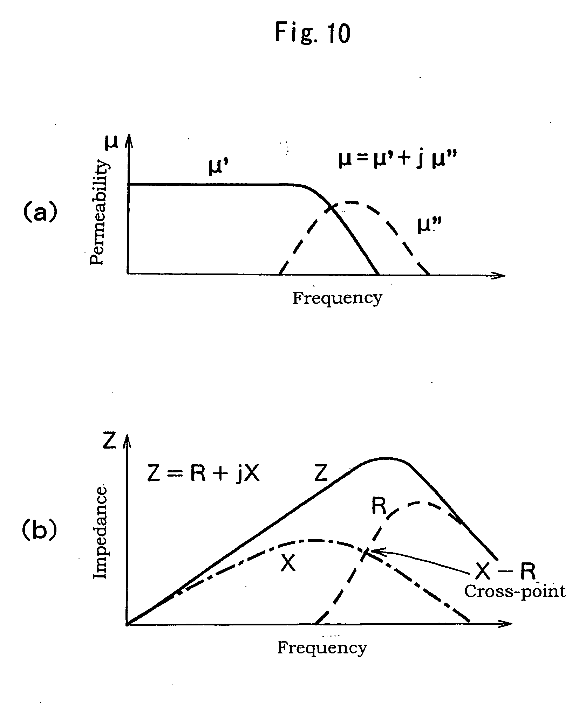

Figs. 10(a) and 10(b) show characteristic performance curves on permeability μ and impedance Z, respectively, as a function of frequency, which are achieved by such a magnetic core as formed of a soft magnetic material. The magnetic core realizes high frequency noise absorbing effect (to be described later) in a high frequency band due to a pure resistance component (R) attributable to imaginary permeability (μ"), and therefore is favorably used as a signal discriminator to discriminate signals from noises.

The impedance Z of the magnetic core having the characteristics described above is conventionally expressed by the permeability μ as follows:

$$Z = R + jX \qquad \text{(Formula 1)}$$

$$\mu = \mu' + j\mu'' \qquad \text{(Formula 2)}$$

where X is a reactance component which is generated by a real part μ' of the permeability μ, and which is proportional to inductance, and R is a resistance component which is generated by an imaginary part μ" of the permeability μ, and which is composed of winding resistance, iron loss, and the like. As described later, the X and R components actually include winding-to-winding capacitance and core-to-winding capacitance, respectively.

Referring to Fig. 10(a), the permeability μ is expressed by the real part μ' and the imaginary part μ". The real part μ' decreases in a high frequency band thus losing a nature as inductance, while the imaginary part μ" starts increasing at a certain frequency, hits its maximum vale, and then starts decreasing. The imaginary part μ" functions as a pure resistance component in a signal discriminator, thus signals or noises in a high frequency band are consumed as thermal energy.

Referring to Fig. 10(b), the reactance component X is dominant in a low frequency band, and the imaginary part μ" increases in a high frequency band thus causing the resistance component R to be dominant. The reactance component reflects noises, and the resistance component converts noises into thermal energy.

The reactance component X reflects a noise in a cable toward an input side of the cable thereby preventing the noise from further conducting in the cable, but the reflected noise may possibly constitute a source of other noises developing into radiation noises. On the other hand, the resistance component R consumes a noise by converting the noise into thermal energy, thus preventing development of any further noises. Accordingly, noses are preferably removed by a method of conversion into thermal energy.

A frequency, at which the values of the reactance component X and the resistance component R are equal to each other, is called "an X-R cross-point frequency", and in case of signal discriminators having the same impedance characteristic, one thereof having a lower X-R cross-point frequency is more effective in reducing noises. In order to achieve frequency characteristics as shown by Figs. 10(a) and 10(b), a magnetic core is conventionally formed of Ni-Zn-based ferrite which has a high resistivity. The Ni-Zn-based ferrite, however, is costly due to its raw material containing Ni, which results in an increased cost of a signal discriminator.

On the other hand, Mn-Zn-based ferrite is inexpensive but commonly has a resistivity as low as 0.1 to 1 Ωm due to electron transfer occurring between $Fe^{3+}$ and $Fe^{2+}$ (between ions), and eddy current loss starts increasing already in a low frequency band, which results in that the Mn-Zn ferrite practically works up to several hundred kHz at the utmost. At a frequency domain exceeding the several hundred kHz, the Mn-Zn ferrite has its permeability (initial permeability) significantly lowered thus completely losing characteristic as a soft magnetic material. Also, for prevention of insulation failure attributable to the low resistivity, a cover or insulating coat is required resulting in increased cost.

In order to solve the aforementioned problem, for example, Japanese Patent Application Laid-Open No. H05-283223 teaches a signal discriminator using a magnetic core which is formed of a comparatively inexpensive Ni-free material (Mn-Zn-based ferrite) under a conventional general manufacturing process. The magnetic core thus formed is not only inexpensive but also achieves frequency characteristic on permeability and impedance substantially equivalent to that of a conventional expensive Ni-Zn-based magnetic core, thus an economical signal discriminator is provided. The aforementioned magnetic core contains as its main components: (a) 20 to 35 mol % MgO, (b) 10 to 20 mol % ZnO, (c) 3 to 10 mol % MnO, and (d) 40 to 50 mol % $Fe_2O_3$; and as additives: (e) 0 to 2 (0 excluded) weight % CuO, $Bi_2$, and $O_3$, respectively.

However, the solution described above involves the following problem. Since a conventional Ni-Zn-based magnetic core has a high resistivity and has an excellent high frequency characteristic, the resonant frequency of a coil is high, and the X-R cross-point frequency is to found to range from 10 MHz upward. Consequently, if the conventional Ni-Zn-based magnet core is applied to an input signal cable in a high input impedance circuit, such as a C-MOS inverter, having an electrostatic capacitance of several pF, a digital signal suffers ringing, undershoot, or overshoot due to a high Q (reciprocal number of loss coefficient) of the circuit, and a signal waveform is distorted. Here, since the magnetic core disclosed in the aforementioned Japanese Patent Application Laid-Open No. H05-283223 is made so as to obtain permeability and impedance with frequency characteristic substantially equivalent to that of the conventional Ni-Zn-based magnetic core as described above, the signal waveform distortion problem associated with the conventional Ni-Zn-based magnetic core is found also in the aforementioned magnetic core. Further, since the magnetic core is inferior to other magnetic materials in magnetic characteristics such as saturation flux density, the magnetic core must have an increased dimension in order to achieve an equivalent characteristic as a signal discriminator. Especially, when it is applied to a power line in which a large current flows, and when ripple current or surge noise becomes a problem, the magnetic core must have its dimension further increased in order to prevent magnetic saturation.

The present invention has been made in light of the above problem, and it is an object of the present invention to provide a signal discriminator, which leverages the variation in the permittivity of Mn-Zn-based ferrite to thereby achieve an impedance characteristic equivalent to that of a signal discriminator formed of a conventional Ni-Zn-based magnetic core, and which also is highly resistant in a high frequency noise band so as to reduce waveform distortion attributable to high frequency noise.

SUMMARY OF THE INVENTION

As described above, the impedance Z of the conventional magnetic core is expressed by the aforementioned Formulas 1 and 2. On the other hand, it is noted in "Ceramic substrate for electronic circuit" (Pages 200 to 201) by Electronic Materials Manufacturers Association of Japan that a magnetic substrate can be treated purely as a magnetic material when an electrostatic field alone acts on it, but exhibits not only a magnetic property but also a dielectric property when high frequency electric and magnetic fields act on it simultaneously like microwave. Further, it is noted that the permittivity of ferrite can reach an order of several thousands at a low frequency (in kHz band and lower), and that most ferrites go beyond dispersion phenomenon in a frequency band ranging from 1 MHz upward, and many ferrites have their permittivity measuring somewhere between 10 to 15 in a microwave band.

The present inventors, et al., with attention focused on the facts noted above, increased the resistivity of a magnetic core formed of a comparatively inexpensive soft magnetic material not containing Ni, etc., and arranged that the real part of complex relative permittivity is large in a frequency band lower than the frequency of an electric signal flowing in the cable and small in a frequency band higher than the frequency of the electric signal, and that a conventional general manufacturing process can be applied. As a result, it happens even in the magnetic core formed of comparatively inexpensive soft magnetic material free of Ni, etc. that the eddy current loss in a signal frequency band can be reduced by increase of resistivity, and also that the resistance component as the signal discriminator can be small in a low frequency band and large in a frequency band of the noise signal due to the complex relative permittivity varying with the change of frequency, thus enabling reduction of waveform distortion arising from the high frequency noise.

Specifically, in order to achieve the object described above, according to Claim 1 of the present invention, in a signal discriminator which is formed of a soft magnetic material to form a closed magnetic path, is attached on a cable such that the cable passes through the closed magnetic path, and which passes an electric signal flowing through the cable and blocks a noise signal flowing through the cable, the soft magnetic material has its complex relative permittivity varying with frequency, and a real part of the complex relative permittivity is large in a frequency domain lower than a frequency of the electric signal flowing through the cable and small in a frequency domain higher than the frequency of the electric signal.

According to Claim 2 of the present invention, in the signal discriminator as described in Claim 1, the real part of the complex relative permittivity of the soft magnetic material may range from 1,000 up to 20,000 at 1 kHz, and from 50 downward at 1 MHz.

According to Claim 3 of the present invention, in the signal discriminator as described in Claim 1 or 2, the soft magnetic material may be Mn-Zn ferrite having a basic component composition comprising 44.0 to 50.0 (50.0 excluded) mol % $Fe_2O_3$, 4.0 to 26.5 mol % ZnO, 0.1 to 8.0 mol % at least one of $TiO_2$ and $SnO_2$, and the rest consisting of MnO.

According to Claim 4 of the present invention, in the signal discriminator as described in Claim 1 or 2, the soft magnetic material may be Mn-Zn ferrite having a basic component composition comprising 44.0 to 50.0 (50.0 excluded) mol % $Fe_2O_3$, 4.0 to 26.5 mol % ZnO, 0.1 to 8.0 mol % at least one of $TiO_2$ and $SnO_2$, 0.1 to 16.0 mol % CuO, and the rest consisting of MnO.

According to Claim 5, in the signal discriminator as described in any one of Claims 1 to 4, the soft magnetic material may have a resistivity of 150 $\Omega$m or higher.

BRIEF DESCRIPTION OF THE DRAWINGS

Fig. 1(a) shows frequency characteristics for explanation of migration of an X-R cross-point frequency;
Fig. 1(b) shows an equivalent circuit of a signal discriminator;
Fig. 2 shows component compositions (unit: mol %) of inventive sample magnetic cores formed of soft magnetic materials according to embodiments of the present invention, and of comparative sample magnetic cores formed of other soft magnetic materials;
Fig. 3 shows actual measurements of basic characteristics on the sample magnetic cores comprising the component compositions (unit: mol %) shown in Fig. 2;
Fig. 4 shows frequency characteristics of real parts $\varepsilon'$ of complex relative permittivity on Samples 1, 2, 3 and 4;
Fig. 5 shows changes of impedance Z on signal discriminators constituted by Samples 1 to 5;
Fig. 6 shows impedance Z on Sample 1 split into a reactance component X2 and a resistance component R;
Fig. 7 shows impedance Z on Sample 4 split into a reactance component X1 and a resistance component R;
Fig. 8 shows a general signal discriminator attached on a cable;
Fig. 9(a) and 9(b) explain general cylindrical or toroidal magnetic core structures to form a closed magnetic path, wherein Fig. 9(a) shows a single piece structure, and Fig. 9 (b) shows a two piece structure; and
Figs. 10(a) and 10(b) show characteristic curves of permeability $\mu$ and impedance Z, respectively, on a magnetic core formed of a soft magnetic material.

DETAILED DESCRIPTION OF THE PREFERRED EMBODIMENTS

As described above, a magnetic core formed of a soft magnetic material, such as ferrite, exhibits not only a magnetic property but also a dielectric property, and has its permittivity varying with the frequency. Consequently, the impedance Z expressed by the aforementioned Formula 1 is affected by permittivity $\varepsilon$. The magnetic core formed of the soft magnetic material according to the present invention will be discussed in view of not only permeability $\mu$ but also permittivity $\varepsilon$.

The permittivity $\varepsilon$ is defined as follows:

$$\varepsilon = \varepsilon' - j\varepsilon'' \qquad \text{(Formula 3)}$$

where $\varepsilon'$ is a real part of the permittivity $\varepsilon$, and $\varepsilon''$ is an imaginary part of the permittivity $\varepsilon$.

As is clear from Fig. 10(b), if the resistance component R produced by the imaginary part $\mu''$ of the permeability $\mu$ moves toward a lower frequency, then the X-R cross-point frequency moves toward a lower frequency, too. The X-R cross-point frequency is caused to move also due to a change in the configuration of the frequency characteristic of the reactance component X.

The present invention leverages the mechanism that the frequency characteristic of the reactance component X changes under the influence of the permittivity $\varepsilon$ in a low frequency band, and thereby the X-R cross-point frequency moves toward a lower frequency.

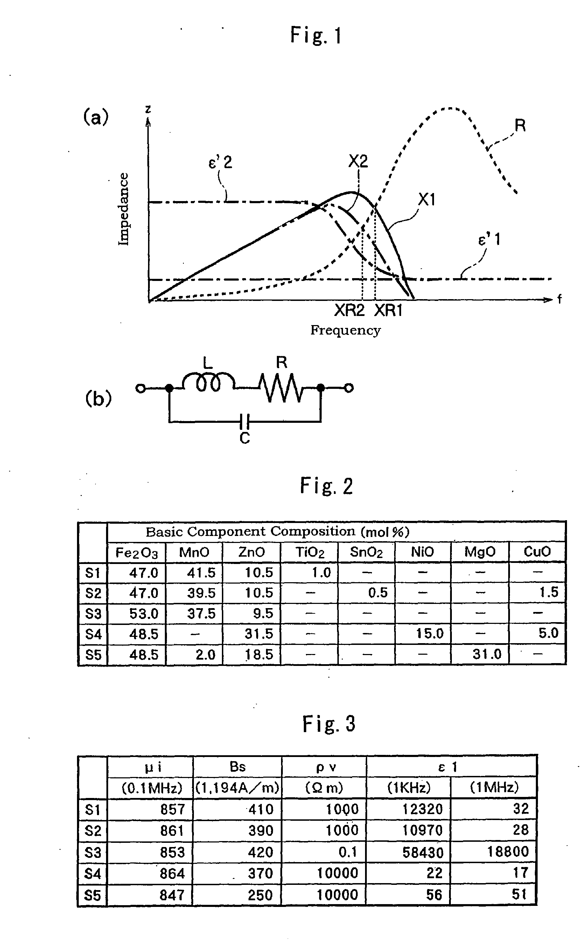

In Fig. 1(a) showing frequency characteristics of the $\varepsilon'$, R and X, and explaining migration of the X-R cross-point frequency, the abscissa axis represents frequency, and the ordinate axis represents impedance split into reactance components X1 and X2, a resistance component R, and real parts $\varepsilon'1$ and $\varepsilon'2$ of permittivity. The X1 is a reactance component in case of the real part $\varepsilon'$ of permittivity staying constant and small ($\varepsilon'1$), while the X2 is a reactance component in case of the real part $\varepsilon'$ of permittivity changing in such a manner as to be large in a low frequency band and small in a high frequency band ($\varepsilon'2$). And, XR1 and XR2 are X-R cross-point frequencies defined by the resistance component R crossing the reactance components X1 and X2, respectively.

Referring to Fig. 1(b), a signal discriminator is represented by a parallel circuit comprising a resistance component R and an inductive reactance L, and a capacitive reactance C. The capacitive reactance C consists of stray capacitance between winding wires, and stray capacitance between a core and wires. The stray capacitance between a core and wires depends on the real part of the permittivity of the core such that when the real part of the permittivity is large, the capacitive reactance C is large. In the soft magnetic material according to the present invention, the capacitive reactance C depends on the real part of the permittivity, and the complex relative permittivity varies with frequency such that its real part is large in a frequency domain lower than the frequency of an electric signal flowing in a cable and small in a frequency domain higher than the aforementioned frequency.

Accordingly, in the reactance component X2, the capacitive reactance C is not negligible with respect to the inductive reactance L in a low frequency domain, in consequence of which the value of the reactance component X2 as the parallel circuit of the capacitive reactance C and the inductive reactance L is caused to decrease (change in configuration). On the other hand, in a high frequency domain, the influence of the capacitive reactance C is decreased, and consequently the reactance component X2 decreases more than the reactance component X1 without considerably changing the impedance characteristic as a whole, and the X-R cross-point frequency moves to the XR2 which is lower than the XR1.

As described above, in the signal discriminator according to the present invention, the frequency characteristic of the reactance component X is changed through the influence of the permittivity $\varepsilon$, whereby the X-R cross-point frequency is caused to move toward a low frequency, and noises in a frequency band where noise components exist are converted into thermal energy thus reducing the waveform distortion originating from high frequency noises.

Examples 1 and 2 will hereinafter be described. Fig. 2 shows basic component compositions (unit: mol %) of inventive sample magnetic cores formed of soft magnetic materials according to Examples 1 and 2, and comparative sample magnetic cores formed of other soft magnetic materials for comparison purpose. Specifically, S1 indicates Sample 1 according to Example 1, S2 indicates Sample 2 according to Example 2, and S3, S4 and S5 indicate Samples 3, 4 and 5, respectively.

In the examples described below, it is assumed that a signal frequency is 1 MHz band, a frequency of noises to be removed is 10 to 500 MHz band, and that the X-R cross-point frequency to discriminate between the signal frequency and the noise frequency is from 10 MHz downward, and resistivity $\rho$, which is to be determined by a voltage applied to a cable, such as a signal line and a power line, is set at 150 $\Omega$m which falls within a range where problems are kept off at an anticipated voltage in normal applications. Under the aforementioned assumption, basic component compositions are set so that the real part $\varepsilon'$ of the complex relative permittivity of a soft magnetic material ranges from 1,000 up to 2,000 at 1 kHz, and from 50 downward at 1 MHz.

The reason the real part $\varepsilon'$ of the complex relative permittivity is adapted to range from 1,000 to 20,000 at 1 kHz is that if it is under 1,000, the capacitive reactance C is too small thus failing to cause the configuration of the frequency characteristic of the reactance X to change, and that if it is over 20,000, then the capacitive reactance C is too large thus causing the reactance X to remarkably change to the extent of making an impact on the entire impedance characteristic. And, the reason the real part $\varepsilon'$ of the complex relative permittivity is adapted to range from 50 downward at 1MHz is that if it is over 50, the capacitive reactance C is too large in a high frequency band thus causing the impedance characteristic to deteriorate in a high frequency band.

(Example 1)

Sample 1 has a basic component composition as shown by S1 in Fig. 2, specifically 47.0 mol % $Fe_2O_3$, 10.5 mol % ZnO, 1.0 mol % $TiO_2$, and 41.5 mol % MnO, which falls within a proposed composition range of 44.0 to 50.0 (50.0 excluded) mol % $Fe_2O_3$, 4.0 to 26.5 mol % ZnO, 0.1 to 8.0 mol % at least one of $TiO_2$ and $SnO_2$, and the rest consisting of MnO. Material powders $Fe_2O_3$, ZnO, $TiO_2$, and MnO as main components preweighed for a predetermined ratio as shown by S1 in Fig. 2 were mixed by a ball mill to produce a mixture, and the mixture was calcined at 900 degrees C for 2 hours in the atmosphere. The mixture calcined was pulverized by a ball mill into particles with a grain diameter averaging about 1.4 $\mu$m. Then, the mixture pulverized was mixed with polyvinyl alcohol added, was granulated, and press-molded under a pressure of 80 MPa into a green compact of a toroidal magnetic core with a post-sinter dimension of 15 mm in outer diameter, 8 mm in inner diameter, and 3 mm in height. The green compact was sintered at 1,150 degrees C for 3 hours in an atmosphere with its oxygen partial pressure controlled by pouring in nitrogen.

(Example 2)

Sample 2 has a basic component composition as shown by S2 in Fig. 2, specifically 47.0 mol % $Fe_2O_3$, 10.5 mol % ZnO, 0.5 mol % $SnO_2$, 1.5 mol % CuO, and 39.5 mol % MnO, which falls within a proposed material composition of 44.0 to 50.0 (50.0 excluded) mol % $Fe_2O_3$, 4.0 to 26.5 mol % ZnO, 0.1 to 8.0 mol % at least one of $TiO_2$ and $SnO_2$, 0.1 to 16.0 mol % CuO, and the rest consisting of MnO. Material powders $Fe_2O_3$, ZnO, $SnO_2$, CuO, and MnO as main components preweighed for a predetermined ratio as shown by S2 in Fig. 2 were mixed by a ball mill to produce a mixture, and the mixture was calcined at 900 degrees C for 2 hours in the atmosphere. The mixture calcined was pulverized by a ball mill into particles with a grain diameter averaging about 1.4 $\mu$m. Then, the mixture pulverized was mixed with polyvinyl alcohol added, was granulated, and press-molded under a pressure of 80 MPa into a green compact of a toroidal magnetic core with a post-sinter dimension of 15 mm in outer diameter, 8 mm in inner diameter, and 3 mm in height. The green compact was sintered at 1,150 degrees C for 3 hours in an atmosphere with its oxygen partial pressure controlled by pouring in nitrogen.

Samples 3, 4 and 5 for comparison purpose have respective basic component compositions as shown by S3, S4 and S5 in Fig. 2. Material powders selected out of $Fe_2O_3$, ZnO, NiO, MgO, CuO, and MnO as main components and pre-weighed for respective predetermined ratios as shown by S3, S4, and S5 in Fig. 2 were mixed by a ball mill to produce respective mixtures, and the respective mixtures were calcined at 900 degrees C for 2 hours in the atmosphere. The respective mixtures calcined were pulverized by a ball mill into particles with a grain diameter averaging about 1.4 μm. Then, the respective mixtures pulverized were mixed with polyvinyl alcohol added, were granulated, and press-molded under a pressure of 80 MPa into respective green compacts of toroidal magnetic cores each with a post-sinter dimension of 15 mm in outer diameter, 8 mm in inner diameter, and 3 mm in height. The green compact intended for Sample 3 was sintered at 1,150 degrees C for 3 hours in an atmosphere with its oxygen partial pressure controlled by pouring in nitrogen, while the green compacts intended for Samples 4 and 5 were sintered at 1,150 degrees C for 3 hours in the atmosphere.

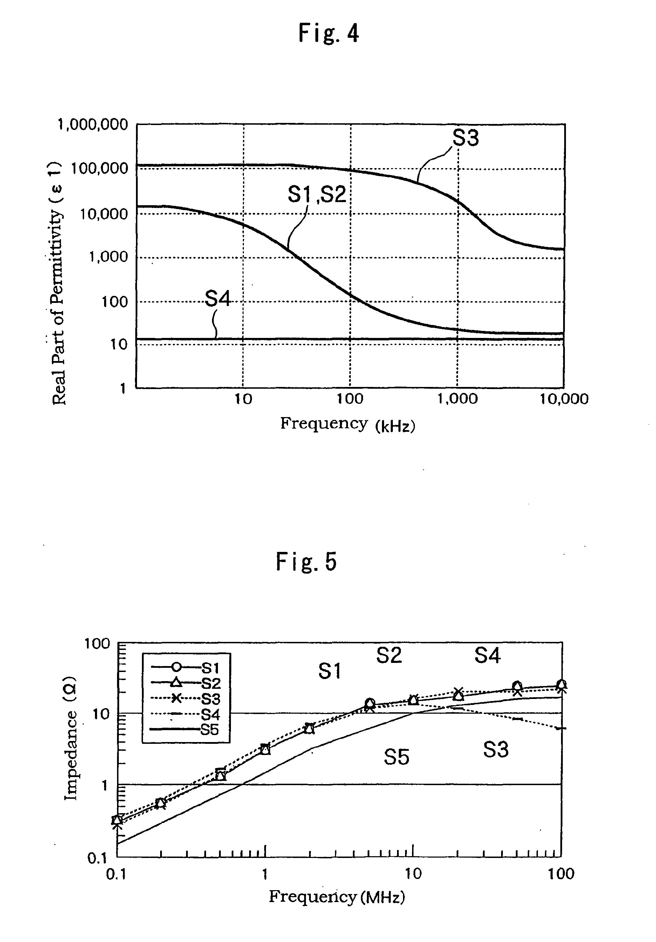

Fig. 3 shows actual measurements of the basic characteristics of the magnetic cores formed with the basic component compositions shown in Fig. 2. The symbols S1 to S5 in Fig. 3 correspond respectively to S1 to S5 in Fig. 2. The actual measurements include: initial permeability μi at 0.1 MHz; saturation magnetic flux density Bs at 1,194 A/m; resistivity pv; and real parts ε' of complex relative permittivity at 1 kHz and 1 MHz, respectively.

Referring to Fig. 3, while Samples 1 and 2, and Sample 4 of Ni-Zn-based ferrite are satisfactory in all of initial permeability μi, saturation magnetic flux density Bs, and resistivity pv, Sample 3 of conventional general Mn-Zn-based ferrite is satisfactory in initial permeability μi, and saturation magnetic flux density Bs, but has a remarkably low resistivity pv therefore preventing its usage in a high frequency band. Also, since the remarkably low resistivity pv of Sample 3 requires either that a thin insulating coat be provided on the surface of the magnetic core or that a cable on which the magnetic core is attached be insulated, its application is limited. And, Sample 5 of Mg-Zn-based ferrite has a low saturation magnetic flux density Bs and therefore does not have an advantage over the other samples. Since a signal discriminator is especially required to be prevented from becoming magnetically saturated by a ripple current and a surge noise, Sample 5 with a low saturation magnetic flux density Bs must have an increased dimension.

Referring to Fig. 4, Samples 1 and 2 have the real parts ε' of complex relative permittivity measuring over 10,000 at 1 kHz, but decreasing at 5 kHz upward and measuring about 30 at 1 MHz. Sample 3 of general Mn-Zn-based ferrite has the real part ε' of complex relative permittivity measuring over 100,000 at 1 kHz, about 2,000 at 1 MHz, and still over 1,000 at 10 MHz. And, Sample 4 of Ni-Zn-based ferrite has the real part ε' of complex relative permittivity measuring as low as about 20 even at 1 kHz.

Referring to Fig. 5 where the abscissa axis represents frequency, and the ordinate axis represents impedance, Sample 3 has its impedance characteristic significantly deteriorating compared with the other samples in a frequency band from 10 MHz upward, that is a frequency range crucial to anti-noise measures in the examples of the present invention where it is assumed that a signal frequency is 1 MHz band, and a noise frequency is 10 to 500 MHz band. This happens because Mn-Zn-based ferrite for Sample 3 has a low resistivity pv, and also has the real part ε' of complex relative permittivity measuring over 100,000 at 1 kHz, about 2,000 at 1 MHz, and still over 1,000 at 10 MHz.

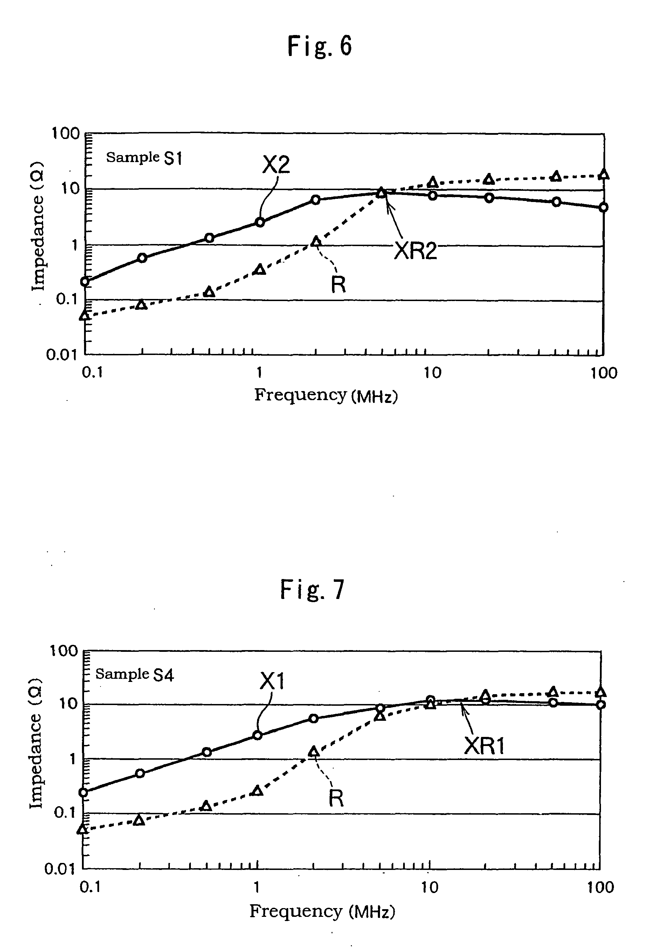

Referring to Fig. 6 showing the impedance Z on the aforementioned Sample 1 split into a reactance component X2 and a resistance component R, Sample 1 has its X-R cross-point frequency XR2 1 falling at approximately 5 MHz. Sample 2 has substantially the same characteristic as Sample 1 shown in Fig. 6.

Referring to Fig. 7 showing the impedance Z on the aforementioned Sample 4 split into a reactance component X1 and a resistance component R, Sample 4 has its X-R cross-point frequency XR1 falling at approximately 10 MHz, which is the same as conventionally.

Samples 1 and 2 have their X-R cross-point frequency falling at 5 MHz because Samples 1 and 2 have the real part ε' of complex relative permittivity measuring over 10,000 at 1 kHz but decreasing from 5 kHz upward to measure about 30 at 1 MHz.

Thus, it is proved that Samples 1 and 2 according to the present invention have better impedance characteristic and noise reducing performance than Sample 3 of conventional Mn-Zn-based ferrite, Sample 4 of Mg-Zn-based ferrite, and Sample 5 of Ni-Zn-based ferrite.

INDUSTRIAL APPLICABILITY

According to Claim 1 of the present invention, in a signal discriminator which is formed of a soft magnetic material to form a closed magnetic path, is attached on a cable such that the cable passes through the closed magnetic path, and which passes an electric signal flowing through the cable and blocks a noise signal flowing through the cable, the soft magnetic material has its complex relative permittivity varying with frequency, and the real part of the complex relative permittivity is large in a frequency domain lower than a frequency of the electric signal flowing through the cable and small in a frequency domain higher than the frequency of the electric signal, whereby the signal discriminator is enabled to suppress noise components while passing signal components.

According to Claims 2 to 5 of the present invention, a low-cost signal discriminator is obtained which is adapted for a signal frequency of 1 MHz band, removes noises in a frequency of 10 to 500 MHz, has an X-R cross-point frequency of 10 MHz and below, and which discriminates signals from noses without magnetic saturation, and with good insulation.

**Claims**

1. A signal discriminator which is formed of a soft magnetic material to form a closed magnetic path, is attached on a cable such that the cable passes through the closed magnetic path, and which passes an electric signal flowing through the cable and blocks a noise signal flowing through the cable, **characterized in that** the soft magnetic material has its complex relative permittivity varying with frequency, and a real part of the complex relative permittivity is large in a frequency domain lower than a frequency of the electric signal flowing through the cable and small in a frequency domain higher than the frequency of the electric signal.

2. A signal discriminator according to Claim 1, wherein the real part of the complex relative permittivity of the soft magnetic material ranges from 1,000 up to 20,000 at 1 kHz, and from 50 downward at 1 MHz.

3. A signal discriminator according to Claim 1 or 2, wherein the soft magnetic material is Mn-Zn ferrite having a basic component composition comprising 44.0 to 50.0 (50.0 excluded) mol % $Fe_2O_3$, 4.0 to 26.5 mol % ZnO, 0.1 to 8.0 mol % at least one of $TiO_2$ and $SnO_2$, and the rest consisting of MnO.

4. A signal discriminator according to Claim 1 or 2, wherein the soft magnetic material is Mn-Zn ferrite having a basic component composition comprising 44.0 to 50.0 (50.0 excluded) mol % $Fe_2O_3$, 4.0 to 26.5 mol % ZnO, 0.1 to 8.0 mol % at least one of $TiO_2$ and $SnO_2$, 0.1 to 16.0 mol % CuO, and the rest consisting of MnO.

5. A signal discriminator according to any one of Claims 1 to 4, wherein the soft magnetic material has a resistivity of 150 $\Omega$m or higher.

## Fig. 1

(a)

(b)

## Fig. 2

|    | Basic Component Composition (mol %) | | | | | | | |
|----|--------|------|------|------|------|------|------|------|
|    | Fe₂O₃ | MnO | ZnO | TiO₂ | SnO₂ | NiO | MgO | CuO |
| S1 | 47.0 | 41.5 | 10.5 | 1.0 | — | — | — | — |
| S2 | 47.0 | 39.5 | 10.5 | — | 0.5 | — | — | 1.5 |
| S3 | 53.0 | 37.5 | 9.5 | — | — | — | — | — |
| S4 | 48.5 | — | 31.5 | — | — | 15.0 | — | 5.0 |
| S5 | 48.5 | 2.0 | 18.5 | — | — | — | 31.0 | — |

## Fig. 3

|    | μ i | Bs | ρ v | ε 1 | |
|----|----------|--------------|--------|--------|--------|
|    | (0.1MHz) | (1,194A/m) | (Ωm) | (1KHz) | (1MHz) |
| S1 | 857 | 410 | 1000 | 12320 | 32 |
| S2 | 861 | 390 | 1000 | 10970 | 28 |
| S3 | 853 | 420 | 0.1 | 58430 | 18800 |
| S4 | 864 | 370 | 10000 | 22 | 17 |
| S5 | 847 | 250 | 10000 | 56 | 51 |

# Fig. 4

# Fig. 5

# Fig. 6

# Fig. 7

Fig. 8

Fig. 9

(a)

(b)

# Fig. 10

## INTERNATIONAL SEARCH REPORT

| International application No. |
| --- |
| PCT/JP03/12043 |

**A. CLASSIFICATION OF SUBJECT MATTER**
$Int.Cl^7$ H01F17/06, H01F1/34

According to International Patent Classification (IPC) or to both national classification and IPC

**B. FIELDS SEARCHED**

Minimum documentation searched (classification system followed by classification symbols)
$Int.Cl^7$ H01F17/06, H01F1/34

Documentation searched other than minimum documentation to the extent that such documents are included in the fields searched

| | | | |
| --- | --- | --- | --- |
| Jitsuyo Shinan Koho | 1922–1996 | Toroku Jitsuyo Shinan Koho | 1994–2003 |
| Kokai Jitsuyo Shinan Koho | 1971–2003 | Jitsuyo Shinan Toroku Koho | 1996–2003 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 3108803 B2 (Minebea Co., Ltd.), 14 September, 2000 (14.09.00), Full text; all drawings & EP 980856 A & US 6210598 B | 1-3,5 |
| Y | JP 3108804 B2 (Minebea Co., Ltd.), 14 September, 2000 (14.09.00), Full text; all drawings & EP 980857 A & US 6180022 B | 1,2,4,5 |
| Y | JP 64-41202 A (Mitsubishi Petrochemical Co., Ltd.), 13 February, 1989 (13.02.89), Full text; all drawings (Family: none) | 1-5 |

☒ Further documents are listed in the continuation of Box C. ☐ See patent family annex.

| | |
| --- | --- |
| * Special categories of cited documents: <br> "A" document defining the general state of the art which is not considered to be of particular relevance <br> "E" earlier document but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| 17 November, 2003 (17.11.03) | 02 December, 2003 (02.12.03) |

| Name and mailing address of the ISA/ <br> Japanese Patent Office | Authorized officer |
| --- | --- |
| Facsimile No. | Telephone No. |

Form PCT/ISA/210 (second sheet) (July 1998)

**EP 1 544 875 A1**

<table>
<tr><td colspan="2">INTERNATIONAL SEARCH REPORT</td><td>International application No.<br>PCT/JP03/12043</td></tr>
</table>

| C (Continuation). DOCUMENTS CONSIDERED TO BE RELEVANT | | |
|---|---|---|
| Category* | Citation of document, with indication, where appropriate, of the relevant passages | Relevant to claim No. |
| Y | JP 5-283223 A (Mitsubishi Electric Corp.),<br>29 October, 1993 (29.10.93),<br>Full text; all drawings<br>(Family: none) | 1-5 |
| E,X | JP 2003-324014 A (Minebea Co., Ltd.),<br>14 November, 2003 (14.11.03),<br>Full text; all drawings<br>(Family: none) | 1-5 |
| E,X | JP 2003-282318 A (Minebea Co., Ltd.),<br>03 October, 2003 (03.10.03),<br>Full text; all drawings<br>(Family: none) | 1-5 |

Form PCT/ISA/210 (continuation of second sheet) (July 1998)